# FASCICULE DE BREVET EUROPEEN

(11) **EP 3 175 193 B1**
(45) Date de publication et mention de la délivrance du brevet: **18.07.2018**
(21) Numéro de dépôt: 15744546.1
(22) Date de dépôt: 28.07.2015
(51) Int. Cl.: F26B 23/00, F26B 23/02, C10B 53/02

(54) **INSTALLATION DE SECHAGE ET DE TORREFACTION DE BIOMASSE A RENDEMENT ENERGETIQUE AMELIORE**
ANLAGE ZUM TROCKNEN UND RÖSTEN VON BIOMASSE MIT VERBESSERTER ENERGIEEFFIZIENZ
FACILITY FOR DRYING AND ROASTING BIOMASS WITH IMPROVED ENERGY EFFICIENCY

(30) Priorité: 28.07.2014 FR 1457289
(43) Date de publication de la demande: 07.06.2017
(73) Titulaire: Commissariat à l'Énergie Atomique et aux Énergies Alternatives, 75015 Paris (FR)
(72) Inventeur: PEDUZZI, Emanuela, IT-21020 Ranco (VA) (IT); MARECHAL, François, CH-1350 Orbe (CH); BOISSONNET, Guillaume, F-38100 Grenoble (FR)
(74) Mandataire: Nony
(86) Numéro de dépôt international: PCT/EP2015/067270
(87) Numéro de publication internationale: WO 2016/016241

(56) Documents cités:
- WO-A1-2013/028361
- DE-A1-102011 005 065
- FR-A1- 2 982 274
- US-A- 5 728 271

## Description

### Domaine technique

La présente invention concerne une installation de séchage et de torréfaction de biomasse, quel que soit son type.

L'invention vise à diminuer le coût énergétique d'une installation combinée de séchage et torréfaction de biomasse, de préférence de biomasse ligno-cellulosique.

Par « biomasse», on entend dans le cadre de l'invention, tout matériau inhomogène d'origine végétale ou animale contenant du carbone, telle que de la biomasse ligno-cellulosique, des résidus forestiers ou agricoles (paille), qui peut être quasi-sec ou imbibé d'eau comme les déchets ménagers.

En particulier, la biomasse peut être de type ligno-cellulosique, telle que le bois et les matières agricoles et présenter n'importe quel taux d'humidité, de préférence comprenant entre 10 et 60% d'eau, et être introduite dans l'installation selon l'invention sous toutes formes variées telle que plaquettes, granulés...

### Etat de la technique

Dans un contexte où la consommation ne cesse d'augmenter, la valorisation de la biomasse est envisagée afin de diversifier les ressources d'énergies. Les filières de conversion thermique par gazéification et combustion sont particulièrement envisagées.

Les usines dites « Biomass to Liquid », désignées sous l'acronyme anglais BtL sont des usines destinées à mettre en oeuvre un procédé de conversion thermochimique de la biomasse par gazéification en vue de produire un carburant liquide. Ces usines BtL ont déjà été largement décrites avec un grand nombre de données économiques tant en investissement qu'en coût de production : [1], [2]. Les usines BtL, plus généralement les usines destinées à produire un carburant gazeux ou liquide à partir de la biomasse, qui sont actuellement conçues sont des projets de démonstration qui visent à tester et valider toute la chaine technologique du procédé de conversion thermochimique. La première étape mise oeuvre ou procédé à part entière consiste en un séchage de la biomasse humide. En effet, l'humidité de la biomasse fraîchement collectée est typiquement comprise entre 30 et 50%, ce taux initial d'humidité variant en fonction du type de biomasse, de la période de collecte et de l'endroit où est stockée la biomasse. Il a déjà été prouvé que l'eau contenue dans le biomasse réduit fortement le rendement de gazéification du fait que cela implique la génération de vapeur d'eau inutile et une évaporation de l'eau nécessaire dans le réacteur de gazéification. En outre, il est d'ores et déjà admis que le séchage naturel de la biomasse ne peut être réellement envisagé dans une application industrielle compte tenu du temps nécessaire : [3], [4], [5].

En d'autres termes, à l'échelle industrielle seul un séchage forcé de la biomasse peut être envisagé. Il semble de même admis que le séchage de la biomasse ligno-cellulosique en dessous d'un taux d'humidité de l'ordre de 15% s'avère inutile du fait qu'en dessous de cette valeur le bois s'avère être très hygroscopique et ré-adsorbe l'eau lorsqu'exposé à de l'air durant son transfert vers le réacteur de gazéification et son stockage intermédiaire. En outre, l'extraction des derniers pourcents d'humidité augmente considérablement la consommation énergétique. Ainsi, il semble admis qu'un séchage de la biomasse aux alentours d'un taux d'humidité de 15% avant sa gazéification est un bon compromis en termes d'efficacité de rendement de conversion et de consommation énergétique requise.

La torréfaction de la biomasse de préférence ligno-cellulosique, est une étape de prétraitement de la biomasse en vue de son injection sous forme pulvérisée dans un réacteur à flux entraîné (réacteur de gazéification) ou dans un réacteur dit de co-combustion biomasse et charbon dans une centrale thermique à charbon ou en vue de sa mise sous forme de granulés. En effet, la structure fibreuse et élastique de la biomasse rend sa micronisation énergivore et confère au produit broyé des caractéristiques inadaptées à une injection sous forme pulvérisée. La torréfaction est un traitement thermique doux de la biomasse à l'interface entre le séchage et la pyrolyse, généralement réalisé à des températures comprises entre 200 et 300°C et qui vise à éliminer l'eau et à modifier une partie de la matière organique de la biomasse pour casser ses fibres. Autrement dit, ce traitement thermique doux altère la structure fibreuse de la biomasse, facilitant ainsi par la suite son broyage et son injection en réacteur de gazéification ou de co-combustion.

Le prétraitement par torréfaction améliore également les propriétés de la biomasse en vue de son stockage en lui conférant notamment un caractère hydrophobe et une résistance aux dégradations biologiques. La granulation est également une application possible après torréfaction de la matière.

Les produits issus de la torréfaction sont le solide, les gaz de torréfaction et les condensables.

Dans une installation de séchage et de torréfaction de la biomasse ligno-cellulosique actuellement connue, on peut distinguer trois unités principales:
- un réacteur de préchauffage/séchage dans lequel la charge d'alimentation de biomasse est chauffée et une partie de l'humidité peut être évaporée, comme évoqué ci-dessus ;
- un réacteur de torréfaction dans lequel la biomasse séchée est chauffée à la température de torréfaction, l'humidité résiduelle est complètement enlevée et un phénomène de dépolymérisation a lieu ;
- une unité de refroidissement du produit torréfié dans laquelle ce dernier est refroidi dans une atmosphère inerte. Le produit solide torréfié peut être exposé à l'air en toute sécurité seulement en dessous de 150°C.

Les réacteurs de torréfaction peuvent être classés en deux catégories distinctes en fonction du mécanisme d'échange de chaleur soit à chauffage direct selon lequel les gaz chauds sont en contact direct avec la charge carbonée, soit à chauffage indirect selon lequel le transfert de chaleur a lieu à travers un échangeur.

La mise en oeuvre actuelle de la torréfaction intégre la rationalisation de la chaleur de manière limitée. Les gaz de torréfaction peuvent être brûlés afin de satisfaire aux exigences d'émission de l'environnement, en utilisant une alimentation supplémentaire de combustible, du gaz naturel en général. Le gaz de combustion résultant peut néanmoins contenir trop d'oxygène pour son utilisation en contact direct avec la biomasse lors de la torréfaction.

Pour résoudre ce problème, il a déjà été proposé dans la demande de brevet WO2013028361 un système de torréfaction qui permet l'utilisation de l'oxydation catalytique et/ou la réutilisation des gaz de torréfaction dans le réacteur de torréfaction, de préchauffage/séchage et dans l'unité de refroidissement. Dans cette demande, les gaz de combustion produits lors de l'oxydation catalytique, en raison de leur faible concentration en oxygène, peuvent être utilisés directement dans le réacteur de torréfaction et, après refroidissement, dans l'unité de refroidissement du produit solide torréfié. L'un des intérêts d'un tel système est qu'il élimine la nécessité d'avoir un milieu inerte ou d'utiliser directement de l'eau de refroidissement, du fait que le gaz inerte est produit par l'oxydation catalytique de la torréfaction des effluents gazeux. Le brûleur catalytique de ce système reçoit le gaz de combustion après recirculation dans le sécheur et l'unité de refroidissement, et dans le réacteur de torréfaction. Les produits de torréfaction combustibles sont donc fortement dilués dans le brûleur, et une alimentation du brûleur en combustible supplémentaire est donc nécessaire. En outre, il est prévu d'avoir un refroidissement pour la recirculation du gaz de combustion dans l'unité de refroidissement.

La demande de brevet US20120137538 propose un réacteur multi-étages avec des zones de séchage et de torréfaction séparées. Les effluents gazeux de torréfaction sont brûlés. Le gaz de combustion est utilisé pour chauffer indirectement le gaz de séchage de la boucle de séchage. Il est ensuite introduit dans la zone de torréfaction et recyclé dans le brûleur en étant enrichi par les gaz libérés. Le mélange du gaz de combustion avec les effluents gazeux peut être introduit dans un condenseur pour l'eau et la séparation des produits condensables, de sorte que certains des produits de la torréfaction aux valeurs de chauffage élevées sont condensés et donc pas valorisés dans le brûleur. Un combustible supplémentaire peut être utilisé dans le brûleur pour fournir la chaleur nécessaire. Dans cette demande, il est proposé l'utilisation de deux boucles de recyclage séparées pour le séchage et la torréfaction. Néanmoins, cette demande n'envisage que l'échange direct de chaleur pour la torréfaction, les gaz de torréfaction étant dilués avec les gaz de combustion. Aucune intégration de chaleur n'est considérée pour l'air et le préchauffage du gaz de torréfaction.

Afin d'éviter la dilution des effluents gazeux de torréfaction, le brevet US8198493 propose un système dans lequel la biomasse est séchée dans un tambour rotatif, de préférence avec un taux de 2 à 4 % d'humidité résiduelle puis alimente un réacteur de torréfaction rotatif à chauffage indirect. La chaleur apporté au réacteur de torréfaction et au tambour-sécheur l'est par des brûleurs conventionnels qui peuvent utiliser une partie de la biomasse sèche du tambour rotatif comme combustible. Le brûleur dédié au tambour-sécheur utilise également les effluents gazeux produits dans le réacteur de torréfaction rotatif. Le gaz de fumée qui en résulte est mélangé avec le gaz de combustion utilisé pour chauffer indirectement le réacteur de torréfaction avant d'entrer dans le sécheur rotatif.

La publication [6] prévoit pour le séchage et la torréfaction dans un procédé de production de granulés (« pellets ») que les effluents gazeux de torréfaction soient recyclés dans le réacteur de torréfaction avant d'être brûlés dans un brûleur de combustible supplémentaire. Le gaz de combustion produit dans le brûleur est utilisé pour chauffer la boucle de gaz de torréfaction et pour chauffer directement la biomasse dans le réacteur de séchage.

La publication FR2982274 A1 divulgue une installation de séchage selon le préambule de la revendication 1. Les installations de l'état de l'art précitées prévoient certes d'utiliser les gaz libérés lors de la torréfaction par combustion conventionnelle ou catalytique, mais aucune d'entre elles n'exploite systématiquement le plein potentiel de l'intégration de la chaleur.

Il existe donc une besoin pour améliorer les installations de séchage et de torréfaction notamment afin de pallier au moins une partie des inconvénients de l'état de l'art notamment en améliorant leur efficacité énergétique.

Le but de l'invention est de répondre au moins en partie à ce besoin.

### Exposé de l'invention

Pour ce faire, l'invention a pour objet une installation de séchage et de torréfaction de biomasse, comprenant :
- un réacteur de séchage, adapté pour sécher de la biomasse humide,
- un réacteur de torréfaction relié au réacteur de séchage et adapté pour réaliser la torréfaction de la biomasse séchée en amont,
- un premier brûleur, adapté pour générer de la chaleur nécessaire au séchage de la biomasse,
- un deuxième brûleur, distinct du premier brûleur, adapté pour générer de la chaleur nécessaire à la torréfaction de la biomasse,
- un élément de récupération de chaleur, relié à la sortie du premier brûleur, et adapté pour récupérer au moins une partie de la chaleur disponible dans le gaz de combustion issu du premier brûleur et la transférer au gaz de séchage pour chauffer ce dernier avant son entrée dans le réacteur de séchage,
- un premier échangeur de chaleur, adapté pour récupérer au moins une partie de la chaleur disponible dans le gaz issu du séchage après son passage dans le réacteur de séchage, et la transférer à l'air de combustion pour préchauffer ce dernier avant son entrée dans le premier brûleur.

Autrement dit, selon l'invention, on met en oeuvre en combinaison les étapes suivantes :
- une séparation physique du préchauffage/séchage et de la torréfaction, ce qui permet d'obtenir une concentration plus élevé des produits volatils combustibles produit pendant la torréfaction,
- une utilisation de deux brûleurs distincts: un bruleur catalytique dédié à la torréfaction et un bruleur conventionnel dédié au séchage.
- une intégration énergétique avec le préchauffage de l'air de combustion et de l'air du séchage avec la chaleur résiduelle disponible dans le gaz de combustion et l'air à la sortie du réacteur de séchage.

La biomasse peut être avantageusement de la biomasse ligno-cellulosique.

Grâce à l'invention, on baisse le coût énergétique du séchage et la torréfaction de la biomasse par rapport aux techniques selon l'état de l'art car on augmente le pouvoir calorifique inférieur (PCI) et on réduit la consommation en gaz naturel.

Dans le réacteur de séchage, la température peut être comprise entre 100 et 300°C, et plus particulièrement entre 100 et 200°C. En effet, au-dessus de 200°C les réactions qui ont lieu ne sont plus uniquement des réactions de séchage, et le risque augmente de voir la concentration de goudrons augmenter dans les effluents produits dans le réacteur.

Dans le réacteur de torréfaction, la température est de préférence comprise entre 200 et 300°C. La température est de préférence encore comprise entre 250 et 300°C pour de la biomasse type bois et entre 220 et 280°C pour de la biomasse de type agricole. En effet, le bois réagit à des températures plus élevées que les biomasses agricoles.

Avantageusement, la sortie du premier brûleur est reliée directement au réacteur de séchage par la ligne d'alimentation du gaz de séchage, l'élément de récupération de chaleur étant alors ladite ligne d'alimentation.

Selon une variante avantageuse, l'élément de récupération de chaleur est un deuxième échangeur de chaleur, adapté pour récupérer au moins une partie de la chaleur disponible dans la ligne de récupération du gaz de combustion issu du premier brûleur, et la transférer à la ligne d'alimentation de gaz de séchage. Selon cette variante avantageuse, il peut être prévu avantageusement un troisième échangeur de chaleur, adapté pour récupérer au moins une partie de la chaleur disponible dans la ligne de récupération du gaz de combustion issu du premier brûleur, et la transférer à l'air de combustion pour préchauffer ce dernier avant son entrée dans le premier brûleur.

Selon une autre variante avantageuse, l'installation comprend un quatrième échangeur de chaleur, adapté pour récupérer au moins une partie de la chaleur encore disponible dans le gaz de combustion issu du premier brûleur, après les transferts au gaz de séchage et au gaz de combustion, et la transférer à la biomasse, avant son entrée dans le réacteur de séchage.

Avantageusement, l'installation comprend un compresseur de gaz adapté pour comprimer le gaz issu de séchage afin de récupérer la chaleur sensible de l'eau évaporée pendant le séchage par condensation.

De préférence, la sortie du deuxième brûleur est reliée directement au réacteur de torréfaction par la ligne de récupération du gaz de combustion issu du deuxième brûleur.

Selon une autre variante avantageuse, l'installation comprend un cinquième échangeur de chaleur, adapté pour récupérer au moins une partie de la chaleur disponible dans le gaz de combustion issu du deuxième brûleur, et la transférer au gaz de torréfaction pour chauffer ce dernier avant son entrée dans le réacteur de torréfaction.

Selon encore une autre variante avantageuse, l'installation comprend un sixième échangeur de chaleur, adapté pour récupérer au moins une partie de la chaleur encore disponible dans le gaz de combustion issu du deuxième brûleur, après le transfert au gaz de torréfaction, et la transférer au gaz de séchage, avant son entrée dans le réacteur de séchage.

Les brûleurs peuvent être de type conventionnel, c'est-à-dire fonctionnant par oxydation à l'air ou de type catalytique, c'est-à-dire selon un procédé d'oxydation à l'air réalisé par un matériau catalytique et qui dégage de la chaleur à une température plus basse que la combustion d'un brûleur conventionnel.

Ainsi, de préférence le premier brûleur est un brûleur de type à flammes dit conventionnel.

De préférence encore, le deuxième brûleur est un brûleur de type catalytique.

L'installation selon l'invention peut être intégrée à une installation de conversion thermochimique de biomasse en un gaz de synthèse largement connu sous l'appellation Syngaz, par gazéification dans un réacteur de gazéification en vue de produire un combustible ou un carburant, notamment un carburant liquide, ou un autre produit de synthèse. La synthèse peut être faite selon le procédé Fischer-Tropsch pour produire du gazole liquide ou un autre carburant.

L'installation selon l'invention peut aussi être intégrée à une installation de mise sous forme de granulés de la biomasse torréfiée.

L'installation selon l'invention peut aussi être intégrée à une installation de co-combustion.

L'invention concerne également l'utilisation de l'installation décrite pour le séchage et la torréfaction de la biomasse ligno-cellulosique.

### Description détaillée

D'autres avantages et caractéristiques de l'invention ressortiront mieux à la lecture de la description détaillée de l'invention faite à titre illustratif et non limitatif en référence aux figures suivantes parmi lesquelles :
- la figure 1 est une vue schématique du principe d'une partie d'une installation de séchage et de torréfaction selon l'état de l'art, à configuration dite à échange de chaleur direct entre le gaz de combustion de l'unique brûleur et la biomasse dans le réacteur de torréfaction;
- la figure 2 est une vue schématique du principe d'une partie d'une installation de séchage et de torréfaction selon l'état de l'art à configuration dite à échange de chaleur indirect entre le gaz de combustion de l'unique brûleur et la biomasse dans le réacteur de torréfaction ;
- la figure 3 est une vue schématique du principe d'une partie d'une installation de séchage et de torréfaction selon l'invention, à configuration dite à échange de chaleur direct entre le gaz de combustion du brûleur dédié à la torréfaction et la biomasse dans le réacteur de torréfaction;
- la figure 4 est une vue schématique du principe d'une partie d'une installation de séchage et de torréfaction selon l'invention, à configuration dite à échange de chaleur indirect entre le gaz de combustion du brûleur dédié à la torréfaction et la biomasse dans le réacteur de torréfaction;
- la figure 5 est une vue schématique du principe d'une partie d'une installation de séchage et de torréfaction selon une variante de l'invention, à configuration dite à échange de chaleur direct entre le gaz de combustion du brûleur dédié à la torréfaction et la biomasse dans le réacteur de torréfaction.

Dans la description qui va suivre ainsi que dans l'ensemble de la demande, les termes « entrée », « sortie » « amont », « aval », sont utilisés par référence avec les sens de transfert de la biomasse, de circulation de l'air de combustion, du gaz de combustion, du gaz de séchage, du gaz issu du séchage, du gaz de torréfaction et du gaz de synthèse dans les installations de séchage et de torréfaction de biomasse selon la présente invention.

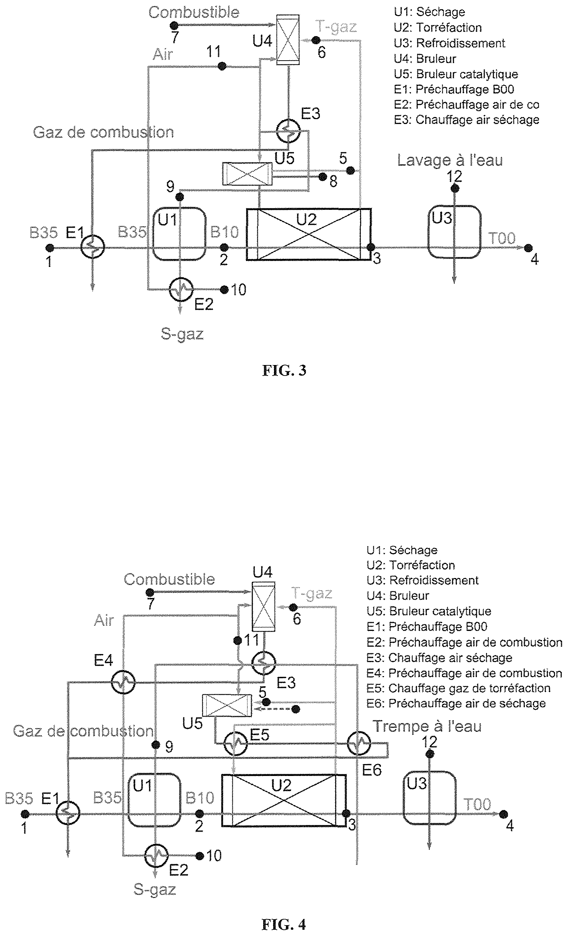

On précise que les flèches représentées en figures 3 à 5 indiquent justement ces sens de transfert de biomasse et circulation des gaz.

Il est à noter de manière importante que des mêmes références numériques ne désignent pas nécessairement les mêmes éléments des installations selon l'invention et selon l'état de l'art. En particulier, les références numériques E1, E2 des échangeurs de chaleur selon l'état de l'art ne désignent pas les mêmes échangeurs de chaleur E1, E2, ces derniers étant mis en oeuvre pour réaliser d'autres fonctions. En particulier encore, le brûleur désigné U4 dans l'installation selon l'état de l'art est l'unique brûleur dédié à apporter la chaleur au réacteur de torréfaction et au réacteur séchage, tandis que le brûleur U4 dans l'installation selon l'invention est le brûleur dédié à apporter la chaleur majoritairement au réacteur de torréfaction.

Dans la suite plusieurs configurations pour le séchage et la torréfaction de la biomasse selon l'état de l'art et selon l'invention sont présentées et évaluées comparativement. Toutes les configurations exploitent le pouvoir calorifique des gaz de torréfaction par combustion catalytique ou conventionnelle.

Dans l'ensemble des figures suivantes, la nomenclature suivante est utilisée:
- « T-gaz » désigne le gaz issu de la torréfaction. Il peut être "pur", ou dilué avec les gaz de combustion, selon la configuration envisagée. Le gaz issu de la torréfaction contient de l'eau, du dioxyde de carbone, du monoxyde de carbone, de l'acide acétique, du formaldéhyde, furfural, etc. Par souci de simplification, seules leurs espèces principales que sont l'eau, le dioxyde de carbone et l'acide acétique sont indiquées dans les tableaux ci-après.
- « S-gaz » désigne le gaz issu du séchage. Il peut être "pur", ou dilué avec les gaz de combustion, selon la configuration envisagée. Le gaz issu du séchage est en prévalence de l'eau, mais contient aussi des fractions extractibles comme les terpènes, les phénols et les tanins.
- « Combustible » désigne un flux de gaz combustible additionnel qui peut être nécessaire pour satisfaire les besoins énergétiques du procédé de séchage et de torréfaction. Le combustible peut être par exemple du Gaz Naturel (GN), mais aussi du bois pulvérisé.
- « Gaz de combustion » désigne le gaz de combustion catalytique ou conventionnelle. Un tel gaz contient de l'eau et du dioxyde de carbone.
- « Bxx » désigne la biomasse brute ou sèche au cours de son transfert, avec l'indice xx qui représente la quantité en eau dans la biomasse. Par exemple, B35 désigne une biomasse brute avec 35% d'humidité, et B10 une biomasse sèche avec 10% d'humidité. Il va de soi que les valeurs d'humidité sont présentés à titre d'exemple et ne sont pas limitatives. La biomasse concernée est une matière d'origine végétale qui contient du carbone, de l'hydrogène, de l'oxygène et de l'azote et des cendres.
- « T00 » désigne le produit solide issu du réacteur de torréfaction, qui contient du carbone, de l'hydrogène, de l'oxygène et de l'azote et des cendres.

On décrit ci-après un exemple d'installation en continu mettant en oeuvre un séchage suivi d'une torréfaction de biomasse ligno-cellulosique selon l'état de l'art, à titre d'exemples comparatifs, et des exemples selon l'invention. On précise que seule une partie des installations sont représentées et qu'elles peuvent comporter bien d'autres unités.

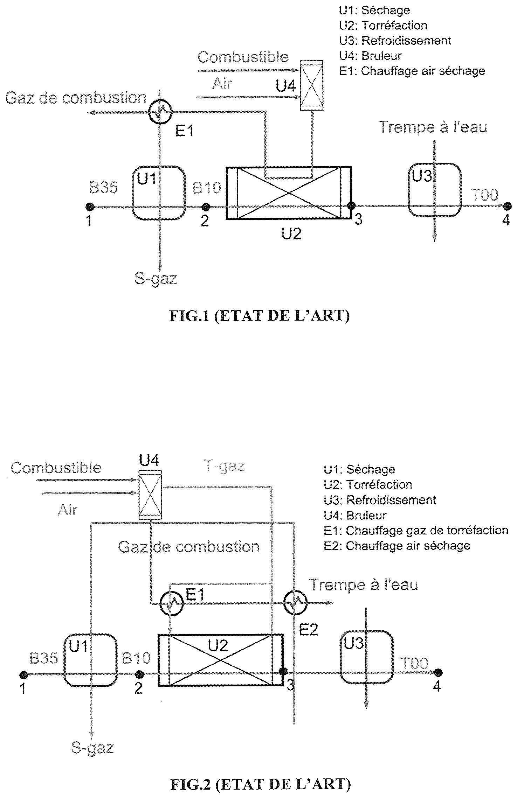

Les exemples comparatifs 1 et 2 d'une installation selon l'état de l'art sont représentés en figures 1 et 2, tandis que les exemples 3 à 5 relatifs à une installation selon l'invention sont représentés en figures 3 à 5.

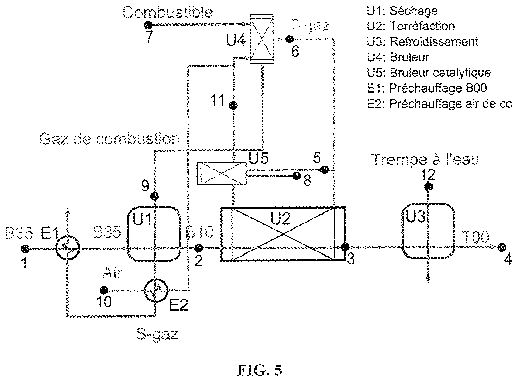

L'exemple 1 comparatif (figure 1) et les exemples 3 et 5 (figures 3 et 5) selon l'invention concernent des configurations d'installation avec échange de chaleur dit direct, car la chaleur nécessaire à la torréfaction utilise celle directement du gaz de combustion issu d'un brûleur en contact direct avec la biomasse au sein du réacteur de torréfaction U2. Ainsi, dans ces configurations à échange de chaleur direct, les gaz de torréfaction sont dilués avec les gaz de combustion. L'ajout d'un combustible, comme par exemple du Gaz Naturel, peut devenir nécessaire pour obtenir un mélange de gaz avec une température adiabatique de combustion suffisamment élevée pour en exploiter le pouvoir calorifique.

L'exemple 2 comparatif (figure 2) et l'exemple 4 (figure 4) selon l'invention concernent des configurations d'installation avec échange de chaleur dit indirect, car la chaleur nécessaire à la torréfaction utilise une boucle de gaz de torréfaction chauffé indirectement par des gaz de combustion issus d'un brûleur pour fournir la chaleur nécessaire à la torréfaction en elle-même. Ainsi, dans ces configurations à échange de chaleur indirect, les gaz de torréfaction ne sont pas dilués avec les gaz de combustion.

On décrit tout d'abord les éléments communs aux deux installations respectivement selon l'état de l'art (figures 1 et 2) et selon l'invention (figures 3 à 5).

De la biomasse ligno-cellulosique brute susceptible d'être alimentée en continu depuis un réservoir de stockage approprié, non représenté, alimente un réacteur/sécheur de biomasse U1, relié en aval à un réacteur de torréfaction U2 lui-même relié en aval à une unité de refroidissement U3 adaptée pour refroidir la biomasse torréfiée.

Les compositions, flux relatifs et températures de référence en entrée et sortie de chacun des réacteurs U1 et U2 et l'unité de refroidissement U3, c'est-à-dire aux points des lignes fluidiques référencés 1, 2, 3 et 4, sont donnés dans le tableau 1 ci-dessous, pour tous les exemples à la fois selon l'état de l'art et selon l'invention.

**TABLEAU 1**

| Flux | | | | |
|---|---|---|---|---|
| Point des lignes fluidiques (réf.) | 1 | 2 | 3 | 4 |
| Température (°C) | 15 | 80 | 250 | 60 |
| Composition (%ₘₐₛₛₑ) | | | | |
| B00 | 65 | 90 | | |
| T00 | | | 100 | 100 |
| Eau | 35 | 10 | | |
| Flux relatif (massique) | 1,54 | 1,11 | 0,80 | 0,80 |

### Exemple 1 (comparatif):

L'installation de séchage et torréfaction représentée en figure 1 est une installation selon l'état de l'art, sans intégration énergétique et qui n'exploite pas le pouvoir calorifique des gaz de torréfaction.

La chaleur nécessaire au procédé est apportée entièrement par le gaz naturel brûlé dans un brûleur de type conventionnel.

Les gaz de torréfaction sont dilués directement dans les gaz combustion provenant de l'unique brûleur conventionnel U4.

A la sortie du réacteur de torréfaction est agencé un échangeur de chaleur E1 qui récupère la chaleur disponible issue du réacteur de torréfaction U2 et la transfère au gaz de séchage pour chauffer ce dernier avant son entrée dans le réacteur de séchage U1.

### Exemple 2 (comparatif):

L'installation de séchage et torréfaction représentée en figure 2 est une installation selon l'état de l'art, avec intégration énergétique par une récupération de chaleur avec un échange de chaleur indirect.

Les gaz de torréfaction sont brûlés avec du gaz naturel pour apporter la chaleur nécessaire à la boucle de gaz de torréfaction. L'échange de chaleur est indirect : ainsi, à la sortie de l'unique brûleur conventionnel U4, est agencé un échangeur de chaleur E1 qui récupère la chaleur disponible issue du brûleur U4 et la transfère au gaz de torréfaction pour chauffer ce dernier avant son entrée dans le réacteur de torréfaction U2.

Ainsi, le gaz de torréfaction n'est pas dilué avec le gaz de combustion. En aval de l'échangeur E1, sur la ligne d'échappement du gaz de combustion est agencé un autre échangeur de chaleur E2 qui récupère la chaleur encore disponible et la transfère au gaz de séchage pour chauffer ce dernier avant son entrée dans le réacteur de séchage U1.

### Exemple 3:

L'installation de séchage et torréfaction représentée en figure 3 est une installation selon l'invention, avec intégration énergétique et avec un échange de chaleur direct.

L'installation comprend deux brûleurs distincts, à savoir un brûleur conventionnel U4 dédié au séchage et un bruleur catalytique dédié à la torréfaction U5.

Le gaz de combustion issu du bruleur U4 est utilisé pour chauffer l'air utilisé pour sécher la biomasse par l'intermédiaire de l'échangeur de chaleur E3.

La chaleur résiduelle dans le gaz issu du séchage est utilisée pour préchauffer l'air de combustion du brûleur U4 par l'intermédiaire d'un autre échangeur de chaleur E2.

De manière avantageuse, le gaz issu du séchage peut être comprimé pour permettre la récupération de la chaleur sensible de l'eau évaporée pendant le séchage par condensation (variante non représentée).

De manière également avantageuse, en aval de l'échangeur de chaleur E3, peut être agencé sur la ligne d'échappement du gaz de combustion, un autre échangeur de chaleur E1 qui récupère la chaleur encore disponible dans le gaz de combustion et la transfère à la biomasse pour préchauffer celle-ci avant son introduction dans le réacteur de séchage U1.

Le gaz de combustion issu du brûleur U5 est utilisé pour apporter la chaleur directement à la biomasse dans le réacteur de torréfaction U2. Le gaz de combustion est enrichi avec les gaz produits pendant la torréfaction, du dioxyde de carbone et de l'eau mais aussi des produits combustibles comme l'acide acétique. Les produits combustibles sont valorisés en recyclant une partie du gaz dans le bruleur U5 et une partie dans le bruleur U4.

Les compositions, flux relatifs et températures de référence aux points des lignes fluidiques, référencés 5 à 12, sont donnés dans le tableau 2 ci-dessous, pour cet exemple 3 selon l'invention.

**TABLEAU 2**

| Flux | | | | | | | | |
|---|---|---|---|---|---|---|---|---|
| Point des lignes fluidiques (réf.) | 5 | 6 | 7 | 8 | 9 | 10 | 11 | 12 |
| Température (°C) | 450 | 450 | 15 | 15 | 200 | 15 | 55 | 15 |

| Composition (%ₘₐₛₛₑ) | | | | | | | | |
|---|---|---|---|---|---|---|---|---|
| Eau | 5,8 | 5,8 | | | | | | 100 |
| Dioxyde de carbone | | | | | | | | |
| Azote | | | | | | 76,7 | 76,7 | |
| Oxygène | | | | | | 23,3 | 23,3 | |
| Acide Acétique | 37,5 | 37,5 | | | | | | |
| Méthane | | | 100 | 100 | | | | |
| Flux relatif (massique) | 0,19 | 0,12 | 0,02 | 0,000 | 9,56 | 0,80 | 0,34 | 1,04 |

### Exemple 4:

L'installation de séchage et torréfaction représentée en figure 4 est une installation selon l'invention, avec intégration énergétique et avec un échange de chaleur indirect. Dans cette configuration, les gaz de torréfaction sont chauffés et recyclés dans le réacteur de torréfaction U2.

L'installation comprend deux brûleurs distincts, à savoir un brûleur conventionnel U4 dédié au séchage et un bruleur catalytique dédié à la torréfaction U5.

Le gaz de combustion issu du bruleur U4 est utilisé pour chauffer l'air utilisé pour sécher la biomasse par l'intermédiaire de l'échangeur de chaleur E3.

La chaleur résiduelle dans le gaz issu du séchage est utilisée pour préchauffer l'air de combustion du brûleur U4 par l'intermédiaire d'un autre échangeur de chaleur E2.

De manière avantageuse, le gaz issu du séchage peut être comprimé pour permettre la récupération de la chaleur sensible de l'eau évaporée pendant le séchage par condensation (variante non représentée).

De manière également avantageuse, en aval de l'échangeur de chaleur E3, peut être agencé sur la ligne d'échappement du gaz de combustion, un autre échangeur de chaleur E4 qui récupère la chaleur encore disponible dans le gaz de combustion et la transfère à l'air de combustion pour le chauffer avant son introduction dans le brûleur U4.

De manière également avantageuse, si possible, en aval de l'échangeur de chaleur E4, peut être agencé sur la ligne d'échappement du gaz de combustion, un autre échangeur de chaleur E1 qui récupère la chaleur encore disponible dans le gaz de combustion et la transfère à la biomasse pour préchauffer celle-ci avant son introduction dans le réacteur de séchage U1.

De la chaleur est apportée par les gaz de combustion produits par la combustion d'une partie des gaz de torréfaction dans le brûleur U5 par l'intermédiaire de l'échangeur de chaleur E5.

De manière avantageuse, les gaz de combustion issus du brûleur U5 sont ensuite utilisés aussi pour préchauffer l'air du séchage par l'intermédiaire d'un autre échangeur de chaleur E6.

Dans l'exemple illustré, les gaz de torréfaction issus du réacteur de torréfaction U2 sont suffisamment concentrés et leur pouvoir calorifique est suffisamment élevé pour qu'il ne soit pas nécessaire d'ajouter du gaz naturel en tant que combustible dans le brûleur U5. A titre de variante, comme illustré par la flèche en pointillés sur la figure 5, on peut tout aussi prévoir une alimentation en gaz naturel.

Une partie des gaz de torréfaction est brûlé dans le brûleur U4, avec un ajout de combustible (gaz naturel) pour dégager suffisamment de chaleur nécessaire au séchage par l'intermédiaire de l'échangeur E3.

Enfin, de manière avantageuse, si possible, la chaleur encore disponible dans les gaz de combustion issus des brûleurs U4 et U5 est utilisée pour préchauffer la biomasse par l'intermédiaire de l'échangeur E1.

Les compositions, flux relatifs et températures de référence aux points des lignes fluidiques, référencés 5 à 12, sont donnés dans le tableau 3 ci-dessous, pour cet exemple 4 selon l'invention.

**TABLEAU 3**

| Flux | | | | | | | | |
|---|---|---|---|---|---|---|---|---|
| Point des lignes fluidiques (réf.) | 5 | 6 | 7 | 8 | 9 | 10 | 11 | 12 |
| Température (°C) | 450 | 450 | 15 | 15 | 200 | 15 | 80 | 15 |

| Composition (%ₘₐₛₛₑ) | | | | | | | | |
|---|---|---|---|---|---|---|---|---|
| Eau | 22 | 22 | | | 0,3 | | | 100 |
| Dioxyde de carbone | 12 | 12 | | | | | | |
| Azote | 53 | 53 | | | 78,7 | 76,7 | 76,7 | |
| Oxygène | 7,5 | 7,5 | | | 21,0 | 23,3 | 23,3 | |
| Acide Acétique | 5,2 | 5,2 | | | | | | |
| Méthane | | | 100 | 100 | | | | |
| Flux relatif (massique) | 1,19 | 1,04 | 0,01 | 0,005 | 9,63 | 10,36 | 10,36 | 1,04 |

On a comparé les performances énergétiques des différentes configurations qui viennent d'être décrites. Les indicateurs de performance considérés sont l'efficacité énergétique, évaluée sur la base du pouvoir calorifique inférieur (PCI) et la consommation en gaz naturel. Les résultats sont résumés dans le tableau 4 ci-dessous.

**TABLEAU 4**

| | ETAT DE l'ART | | INVENTION | |
|---|---|---|---|---|
| Exemples | n°1 (comparatif) | n°2 (comparatif) | n°3 | n°4 |
| Gaz Naturel | | | | |
| kg_{GN}/kg_{B35} | 0,0504 | 0,0161 | 0,0107 | 0,0153 |
| kJ_{GN}/kJ_{B35} (PCI) | 0,1298 | 0,0414 | 0,0276 | 0,0395 |

| Efficacité | | | | |
|---|---|---|---|---|
| kJ_{T00}/(kJ_{B35}+kJ_{GN}) (PCI) | 0,8045 | 0,8728 | 0,8845 | 0,8744 |

De ce tableau 4, il ressort clairement une installation de séchage et de torréfaction selon l'invention permet d'augmenter l'efficacité du procédé de séchage et de torréfaction de la biomasse (PCI augmenté) et de réduire la consommation de gaz naturel, que ce soit en configuration d'échange de chaleur direct ou indirect.

On a représenté en figure 5, une variante de la configuration d'installation conforme à l'invention selon la figure 3, i.e. en échange de chaleur direct.

Selon cette variante, la biomasse peut être séchée directement en utilisant les gaz de combustion issus du brûleur U4. Autrement dit, la ligne de récupération du gaz de combustion issu du brûleur U4 est reliée directement entre la sortie de ce dernier et le réacteur de séchage U1.

Selon cette variante également, en aval de l'échangeur de chaleur E2, peut être agencé sur la ligne de récupération du gaz issu du séchage gaz de combustion, un autre échangeur de chaleur E1 qui récupère la chaleur encore disponible dans le gaz issu du séchage et la transfère à la biomasse pour préchauffer celle-ci avant son introduction dans le réacteur de séchage U1.

D'autres variantes ou améliorations peuvent être prévues sans pour autant sortir du cadre de l'invention.

Par exemple, le brûleur dédié au séchage, référencé U4 sur les figures 3 à 5 peut être de type catalytique.

De manière plus générale, les deux brûleurs peuvent être catalytiques ou conventionnels et brûler un combustible additionnel, comme du gaz naturel.

D'autres variantes et améliorations peuvent être prévues sans pour autant sortir du cadre de l'invention.

L'invention n'est pas limitée aux exemples qui viennent d'être décrits ; on peut notamment combiner entre elles des caractéristiques des exemples illustrés au sein de variantes non illustrées.

### Références citées

[1]: Tijmensen MJA, Faaij APC, Hamelinck CN, Hardeveld MRM. « Exploration of the possibilities of Fischer Tropsch liquids and power via biomass gasification ». Biomass& Bioenergy 2002; 23: 129-52.
[2]: Haarlemmer G, Boissonnet G, Imbach J, Setier P-A, Peduzzi E. « Second generation BtL type biofuels - a production cost analysis ». Energy & Environmental Science 2012; 7.
[3]: Simpson WT. « Equilibrium Moisture Content of Wood in Outdoor Locations in the United States and Worldwide ». FPL-RN-0268. Forest Products Laboratory: Madison, Wisconsin, 1998.
[4]: Höldrich A, Hartmann H. « In Storage of wood logs - «Drying speed and dry matter losses », 14th European Biomass Conference, Paris, France, 2005.
[5]: Scholz V, Idler C, Daries W « In Energy loss and mould development during storage of wood chips in unventilated piles », 14th European Biomass Conference, Paris, France, 2005.
[6]: Bergman, « Combined torrefaction and pelletisation. The TOP process » P.C.A., 2005.

## Revendications

1. Installation de séchage et de torréfaction de biomasse, comprenant :
- un réacteur de séchage (U1), adapté pour sécher de la biomasse humide,
- un réacteur de torréfaction (U2) relié au réacteur de séchage et adapté pour réaliser la torréfaction de la biomasse séchée en amont,
- un premier brûleur (U4), adapté pour générer de la chaleur nécessaire au séchage de la biomasse,
- un deuxième brûleur (U5), distinct du premier brûleur, adapté pour générer de la chaleur nécessaire à la torréfaction de la biomasse,
- un élément de récupération de chaleur (E3), relié à la sortie du premier brûleur, et adapté pour récupérer au moins une partie de la chaleur disponible dans le gaz de combustion issu du premier brûleur et la transférer au gaz de séchage pour chauffer ce dernier avant son entrée dans le réacteur de séchage,
**caractérisée en ce qu'**elle comprend
- un premier échangeur de chaleur (E2), adapté pour récupérer au moins une partie de la chaleur disponible dans le gaz issu du séchage après son passage dans le réacteur de séchage, et la transférer à l'air de combustion pour préchauffer ce dernier avant son entrée dans le premier brûleur.

2. Installation selon la revendication 1, la sortie du premier brûleur étant reliée directement au réacteur de séchage par la ligne d'alimentation (9) du gaz de séchage, l'élément de récupération de chaleur étant alors ladite ligne d'alimentation.

3. Installation selon la revendication 1, l'élément de récupération de chaleur étant un deuxième échangeur de chaleur (E3), adapté pour récupérer au moins une partie de la chaleur disponible dans la ligne de récupération du gaz de combustion issu du premier brûleur, et la transférer à la ligne d'alimentation (9) de gaz de séchage.

4. Installation selon la revendication 3, comprenant un troisième échangeur de chaleur (E4), adapté pour récupérer au moins une partie de la chaleur disponible dans la ligne de récupération du gaz de combustion issu du premier brûleur, et la transférer à l'air de combustion pour préchauffer ce dernier avant son entrée dans le premier brûleur.

5. Installation selon l'une des revendications précédentes, comprenant un quatrième échangeur de chaleur (E1), adapté pour récupérer au moins une partie de la chaleur encore disponible dans le gaz de combustion issu du premier brûleur, après les transferts au gaz de séchage et au gaz de combustion, et la transférer à la biomasse, avant son entrée dans le réacteur de séchage.

6. Installation selon l'une des revendications précédentes, comprenant un compresseur de gaz adapté pour comprimer le gaz issu de séchage afin de récupérer la chaleur sensible de l'eau évaporée pendant le séchage par condensation.

7. Installation selon l'une des revendications précédentes, la sortie du deuxième brûleur (U5) étant reliée directement au réacteur de torréfaction par la ligne de récupération du gaz de combustion issu du deuxième brûleur.

8. Installation selon l'une des revendications 1 à 6, comprenant un cinquième échangeur de chaleur (E5), adapté pour récupérer au moins une partie de la chaleur disponible dans le gaz de combustion issu du deuxième brûleur, et la transférer au gaz de torréfaction pour chauffer ce dernier avant son entrée dans le réacteur de torréfaction.

9. Installation selon la revendication 8, comprenant un sixième échangeur de chaleur (E6), adapté pour récupérer au moins une partie de la chaleur encore disponible dans le gaz de combustion issu du deuxième brûleur, après le transfert au gaz de torréfaction, et la transférer au gaz de séchage, avant son entrée dans le réacteur de séchage.

10. Installation selon l'une des revendications précédentes, le premier brûleur étant un brûleur de type à flammes dit conventionnel.

11. Installation selon l'une des revendications précédentes, le deuxième brûleur étant un brûleur de type catalytique.

12. Utilisation de l'installation selon l'une des revendications précédentes pour le séchage et la torréfaction de la biomasse ligno-cellulosique.

## Patentansprüche

1. Anlage zum Trocknen und Rösten von Biomasse, umfassend:
- einen Trocknungsreaktor (U1), der geeignet ist, feuchte Biomasse zu trocknen,
- einen Röstreaktor (U2), der mit dem Trocknungsreaktor verbunden ist und geeignet ist, das Rösten der stromaufwärts getrockneten Biomasse vorzunehmen,
- einen ersten Brenner (U4), der geeignet ist, die Hitze zu erzeugen, die für das Trocknen der Biomasse notwendig ist,
- einen zweiten Brenner (U5), der von dem ersten Brenner verschieden und geeignet ist, die Hitze zu erzeugen, die für das Rösten der Biomasse notwendig ist,
- ein Wärmerückgewinnungselement (E3), das mit dem Ausgang des ersten Brenners verbunden und geeignet ist, mindestens einen Teil der Wärme, die in dem Verbrennungsgas verfügbar ist, das von dem ersten Brenner stammt, zurückzugewinnen, und diese zu dem Trocknungsgas zu transferieren, um dieses Letztere vor seinem Eintritt in den Trocknungsreaktor zu erhitzen,
**dadurch gekennzeichnet, dass** diese umfasst:
- einen ersten Wärmetauscher (E2), der geeignet ist, mindestens einen Teil der Wärme, die in dem Verbrennungsgas verfügbar ist, das von der Trocknung stammt, nach seinem Durchgang durch den Trocknungsreaktor zurückzugewinnen, und diese zu der Verbrennungsluft zu transferieren, um diese Letztere vor ihrem Eintrifft in den ersten Brenner vorzuwärmen.

2. Anlage nach Anspruch 1, wobei der Ausgang des ersten Brenners direkt mit dem Trocknungsreaktor durch die Zufuhrleitung (9) des Trocknungsgases verbunden ist, wobei daher das Wärmerückgewinnungselement die Zufuhrleitung ist.

3. Anlage nach Anspruch 1, wobei das Wärmerückgewinnungselement ein zweiter Wärmetauscher (E3) ist, der geeignet ist, mindestens einen Teil der Wärme, die in der Rückgewinnungsleitung des Verbrennungsgases verfügbar ist, das von dem ersten Brenner stammt, zurückzugewinnen und diese zu der Zufuhrleitung (9) des Trocknungsgases zu transferieren.

4. Anlage nach Anspruch 3, umfassen einen dritten Wärmetauscher (E4), der geeignet ist, mindestens einen Teil der Wärme, die in der Rückgewinnungsleitung des Verbrennungsgases verfügbar ist, das von dem ersten Brenner stammt, zurückzugewinnen und diese Letztere vor ihrem Eintritt in den ersten Brenner vorzuwärmen.

5. Anlage nach einem der vorhergehenden Ansprüche, umfassend einen vierten Wärmetauscher (E1), der geeignet ist, mindestens einen Teil der Wärme, die in dem Verbrennungsgas verfügbar ist, das von dem ersten Brenner stammt, nach den Transfers zu dem Trocknungsgas und zu dem Verbrennungsgas zurückzugewinnen, und diese zu der Biomasse vor ihrem Eintritt in den Trocknungsreaktor zu transferieren.

6. Anlage nach einem der vorhergehenden Ansprüche, umfassend einen Gaskompressor, der geeignet ist, das Gas, das von der Trocknung stammt, zu komprimieren, um die Abwärme des während der Trocknung durch Kondensation verdampften Wassers zurückzugewinnen.

7. Anlage nach einem der vorhergehenden Ansprüche, wobei der Ausgang des zweiten Brenners (U5) direkt mit dem Röstreaktor durch die Rückgewinnungsleitung des Verbrennungsgases, das von dem zweiten Brenner stammt, verbunden ist.

8. Anlage nach einem der Ansprüche 1 bis 6, umfassend einen fünften Wärmetauscher (E5), der geeignet ist, mindestens einen Teil der Wärme, die in dem Verbrennungsgas verfügbar ist, das von dem zweiten Brenner stammt, zurückzugewinnen und diese zu dem Röstgas zu transferieren, um dieses Letztere vor seinem Eintritt in den Röstreaktor vorzuwärmen.

9. Anlage nach Anspruch 8, umfassend einen sechsten Wärmetauscher (E6), der geeignet ist, mindestens einen Teil der Wärme, die in dem Verbrennungsgas verfügbar ist, das von dem zweiten Brenner stammt, zurückzugewinnen, nach dem Transfer zu dem Röstgas, und diese zu dem Trocknungsgas zu transferieren, vor seinem Eintritt in den Trocknungsreaktor.

10. Anlage nach einem der vorhergehenden Ansprüche, wobei der erste Brenner ein Brenner vom als herkömmlich bezeichneten Flammentyp ist.

11. Anlage nach einem der vorhergehenden Ansprüche, wobei der zweite Brenner ein Brenner vom katalytischen Typ ist.

12. Verwendung der Anlage nach einem der vorhergehenden Ansprüche, zum Trocknen und Rösten von Lignocellulose-Biomasse.

## Claims

1. Installation for drying and roasting biomass, comprising:
- a dryer (U1) that is designed to dry the wet biomass,
- a roaster (U2) that is connected to the dryer and is designed to roast the previously dried biomass,
- a first burner (U4) that is designed to generate heat necessary for drying the biomass,
- a second burner (U5) that is separate from the first burner and is designed to generate heat necessary for roasting the biomass,
- a heat recovery element (E3) that is connected to the outlet of the first burner and is designed to recover at least part of the heat available in the combustion gas produced by the first burner and to transfer this heat to the drying gas in order to heat the latter prior to its entry into the dryer,
**characterized in that** it comprises
- a first heat exchanger (E2) that is designed to recover at least part of the heat available in the gas coming from the drying stage once it has passed through the dryer, and to transfer this heat to the combustion air in order to preheat the latter prior to its entry into the first burner.

2. Installation according to Claim 1, the outlet of the first burner being directly connected to the dryer via the drying gas supply line (9), the heat recovery element then being said supply line.

3. Installation according to Claim 1, the heat recovery element being a second heat exchanger (E3) that is designed to recover at least part of the heat available in the line for recovering the combustion gas produced by the first burner, and to transfer this heat to the drying gas supply line (9) .

4. Installation according to Claim 3, comprising a third heat exchanger (E4) that is designed to recover at least part of the heat available in the line for recovering the combustion gas produced by the first burner, and to transfer this heat to the combustion air in order to preheat the latter prior to its entry into the first burner.

5. Installation according to one of the preceding claims, comprising a fourth heat exchanger (E1) that is designed to recover at least part of the heat still available in the combustion gas produced by the first burner, after the transfers to the drying gas and to the combustion gas, and to transfer this heat to the biomass prior to its entry into the dryer.

6. Installation according to one of the preceding claims, comprising a gas compressor that is designed to compress the gas coming from the drying stage in order to recover, by condensation, the sensible heat of the water evaporated during drying.

7. Installation according to one of the preceding claims, the outlet of the second burner (U5) being directly connected to the roaster via the line for recovering the combustion gas produced by the second burner.

8. Installation according to one of Claims 1 to 6, comprising a fifth heat exchanger (E5) that is designed to recover at least part of the heat available in the combustion gas produced by the second burner, and to transfer this heat to the roasting gas in order to heat the latter prior to its entry into the roaster.

9. Installation according to Claim 8, comprising a sixth heat exchanger (E6) that is designed to recover at least part of the heat still available in the combustion gas produced by the second burner, after the transfer to the roasting gas, and to transfer this heat to the drying gas prior to its entry into the dryer.

10. Installation according to one of the preceding claims, the first burner being a burner of the flame that is to say conventional, type.

11. Installation according to one of the preceding claims, the second burner being a burner of the catalytic type.

12. Use of the installation according to one of the preceding claims for drying and roasting biomass of the ligno-cellulose type.
